Europäisches Patentamt

European Patent Office

Office européen des brevets

(19)

(11) Veröffentlichungsnummer: **0 026 363**
**A1**

(12) # EUROPÄISCHE PATENTANMELDUNG

(21) Anmeldenummer: **80105371.1**

(22) Anmeldetag: **08.09.80**

(51) Int. Cl.³: **G 02 B 7/26**
**H 04 B 9/00**

(30) Priorität: **24.09.79 DE 2938526**

(43) Veröffentlichungstag der Anmeldung:
**08.04.81 Patentblatt 81/14**

(84) Benannte Vertragsstaaten:
**AT BE CH DE FR GB IT LI NL SE**

(71) Anmelder: **SIEMENS AKTIENGESELLSCHAFT Berlin
und München
Postfach 22 02 61
D-8000 München 22(DE)**

(72) Erfinder: **Witte, Hans-H., Dr.
Hippelstrasse 15
D-8000 München 82(DE)**

(54) **Optischer 4-Tor-Koppler.**

(57) Um bei einem optischen 4-Tor-Koppler den Einkoppel- und den Auskoppelgrad weitgehend unabhängig voneinander einstellen zu können und gleichzeitig den Einkoppelverlust klein zu halten, ist vorgesehen, daß der Durchmesser der einkoppelnden Lichtleitfaser (4) wesentlich kleiner ist als der der übrigen Lichtleitfasern (1,2,3). Durch die geringen Einkoppelverluste eignen sich diese Koppler besonders für den Einsatz in optischen Datenbussen mit T-Netzstruktur. Gegenüber bekannten Datenbussen in T-Netzstruktur kann die Zahl der Teilnehmer erheblich gesteigert werden.

FIG 1

EP 0 026 363 A1

0026363

SIEMENS AKTIENGESELLSCHAFT    Unser Zeichen
Berlin und München            VPA 79 P 7175

## Optischer 4-Tor-Koppler.

Die Erfindung betrifft einen optischen 4-Tor-Koppler
mit einer ankommenden, einer weiterführenden, einer
einkoppelnden und einer auskoppelnden Multimode-
Lichtleitfaser, bei dem die planen Stirnflächen der
vier Fasern achsversetzt aneinanderstoßen (Siemens
Forschungs- u. Entwicklungs-Bericht, Bd.8 (1979),
Nr.3, Seiten 141-143). Bei diesem bekannten Koppler
sind die Durchmesser aller Lichtleitfasern gleich
groß, wodurch der Einkoppel- gleich dem Auskoppelgrad
ist. Werden solche Koppler in optischen Datenbussen
mit T-Netzstruktur eingesetzt, so ergibt das einen
mit der Zahl der Teilnehmer linear steigenden Einkoppelverlust.

Der vorliegenden Erfindung liegt die Aufgabe zugrunde,
einen Koppler der eingangs genannten Art anzugeben,
bei dem der Ein- und der Auskoppelgrad weitgehend unabhängig voneinander und die Einkoppelverluste wesent-

Gdl 1 Bla / 24.9.79

lich herabgesetzt sind.

Diese Aufgabe wird erfindungsgemäß dadurch gelöst, daß die Querschnittsfläche der einkoppelnden Lichtleitfaser kleiner ist als die der übrigen Fasern.

Solange die Achsen der ankommenden und der weiterführenden Lichtleitfaser fluchten, wird praktisch nichts aus der einkoppelnden Faser in die weiterführende Faser eingekoppelt und auch nichts aus der ankommenden Faser ausgekoppelt. Mit steigendem Achsenversatz wird dann mehr und mehr ein- bzw. ausgekoppelt. Durch die kleinere Querschnittsfläche der Einkoppelfaser nimmt dabei der Einkoppelverlust mit steigendem Faserachsversatz stärker ab als der Auskoppelgrad zunimmt. Entspricht der Versatz den Abmessungen der Einkoppelfaser, so wird praktisch das gesamte Licht aus der Einkoppelfaser in die weiterführende Faser eingekoppelt. Wird der Faserachsversatz weiter erhöht, so ändert sich an den Verhältnissen auf der Einkoppelseite nichts, der Auskoppelgrad hingegen wird weiter gesteigert. Somit lassen sich Ein- und Auskopplung in gewissen Bereichen unabhängig voneinander einstellen.

Es können praktisch sämtliche Arten von Multimode-Lichtleitfasern verwendet werden, wobei sich unterschiedliche Koppelverhältnisse ergeben. Neben den üblichen im Querschnitt kreisförmigen können auch im Querschnitt rechteckige Lichtleitfasern eingesetzt werden.

Um bei den im Querschnitt kreisförmigen Lichtleitfasern die geometrischen Einfügeverluste klein zu halten, ist vorteilhafterweise vorgesehen, daß die Achsen aller Fasern in einer Ebene liegen.

Neben den bedingt durch die kreisförmigen Querschnitte auftretenden geometrischen Einfügeverlusten ergeben sich weitere Verluste durch das in die Fasermäntel übergekoppelte Licht. Um diese zusätzlichen Verluste möglichst klein zu halten, ist in Weiterführung der Erfindung vorgesehen, daß für die übrigen Fasern z.B. Stufenindex-Dickkernfasern vorgesehen sind. Derartige Fasern haben beispielsweise einen Kerndurchmesser von 200 μm und eine Mantelstärke von etwa 5 μm. Im Verhältnis zu der Kernfläche kann der Verlust in der dazu kleinen Mantelfläche nahezu vernachlässigt werden. Andererseits sollte der Durchmesser der einkoppelnden Lichtleitfaser möglichst klein sein, um bereits bei kleinem Faserachsversatz viel Licht in die weiterführende Lichtleitfaser einkoppeln zu können. Es ist daher vorteilhafterweise vorgesehen, daß die Kernfläche der einkoppelnden Lichtleitfaser annähernd gleich der abstrahlenden Fläche des verwendeten Senders ist. In diesem Fall wird die gesamte Sendeleistung in die einkoppelnde Lichtleitfaser überführt und entsprechend dem eingestellten Versatz in die weiterführende Faser eingekoppelt.

Beispielsweise steigt die gesamte abgestrahlte Leistung einer LED vom Burus-Typ in weiten Grenzen mit abnehmender Emissionsfläche. Es wird daher versucht, die strahlende Fläche der LED klein zu halten. Eine derartige LED eignet sich beispielsweise sehr gut als Sender. Die Kernfläche der einkoppelnden Lichtleitfaser sollte in diesem Fall annähernd gleich der strahlenden Fläche der LED sein.

Auf diese Weise ergeben sich 4-Tor-Koppler, die bei gegebenem Auskoppelgrad eine hohe Einkopplung und gleichzeitig geringe Einfügeverluste gewährleisten. Derartige 4-Tor-Koppler eignen sich besonders für den Einsatz in optischen Bussystemen mit T-Netzstruktur. Es hat sich gezeigt, daß durch die Verwendung dieser erfindungsgemäßen Koppler die maximale Anzahl N von Endgeräten, d.h. die Teilnehmerzahl, wesentlich erhöht werden kann.

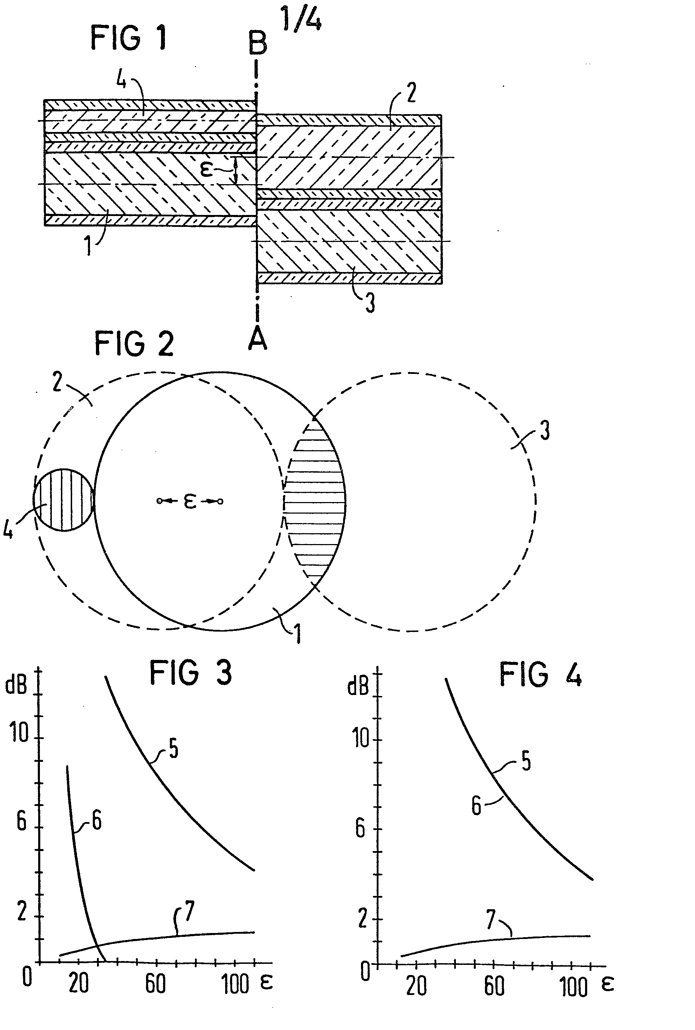

Zur weiteren Erläuterung der Erfindung wird auf die Zeichnung Bezug genommen, in deren Fig. 1 und 2 ein Ausführungsbeispiel eines 4-Tor-Kopplers in zwei Ansichten geschnitten dargestellt ist.

In Fig.3 sind für einen Koppler gemäß dem Ausführungsbeispiel nach der Fig.1 der Auskoppelgrad, der Einkoppelverlust und der Einfügeverlust als Funktion des Faserachsenversatzes dargestellt.

Fig.4 zeigt die entsprechenden Kurven für einen bekannten Koppler, bei dem alle Fasern den gleichen Durchmesser haben.

In Fig.5 ist der Aufbau eines optischen Datenbusses mit T-Netzstruktur prinzipiell dargestellt.

In Fig.6 ist die maximale Anzahl N von Endgeräten in einem solchen Datenbus als Funktion des Faserachsenversatzes dargestellt.

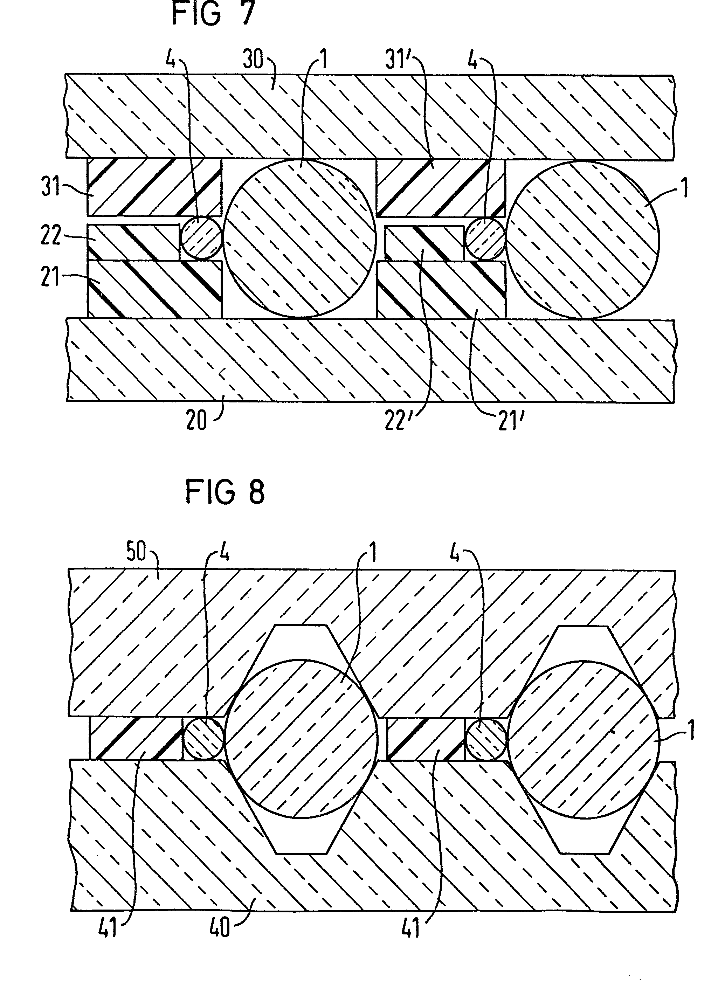

Anhand der Fig.7 bis 10 werden vorteilhafte Wege zur Herstellung des erfindungsgemäßen Kopplers erläutert.

Die Fig.1 zeigt einen Längsschnitt durch einen erfindungsgemäßen 4-Tor-Koppler. Mit 1 ist dabei die ankommende Faser bezeichnet; 2 und 3 stellen die weiterführende und die abzweigende Faser dar. Alle drei Fasern 1 bis 3 sind beispielsweise Stufenindex-Mantelfasern mit einem Kerndurchmesser von 200 µm und einer Mantel-

stärke von ca. 5 µm. Zur Verdeutlichung sind die Mäntel der Fasern in der Fig.1 im Verhältnis zum Kerndurchmesser dicker dargestellt.

Mit 4 ist die einkoppelnde Lichtleitfaser bezeichnet, deren Kerndurchmesser z.B. lediglich 25 µm beträgt. Der Mantel hat wiederum eine Dicke von 5 µm. Der Faserachsenversatz ist mit $\varepsilon$ bezeichnet. Es sind auch andere Faserdurchmesser möglich. So kann beispielsweise eine dickere Einkoppellichtleitfaser verwendet werden. Ebenso kann eine Einkoppelfaser ohne Mantel zum Einsatz kommen.

Fig.2 zeigt in einem willkürlichen Maßstab einen Schnitt entlang der Linie A-B durch einen Koppler entsprechend der Fig.1. Die Fasermäntel sind in diesem prinzipiellen Schnitt nicht extra dargestellt. Gleiche Teile sind mit gleichen Bezugszeichen versehen. Diese Figur zeigt deutlich die Überlappungen der ankommenden Faser 1 und der einkoppelnden Faser 4 mit der weiterführenden Faser 2 und der auskoppelnden Faser 3. Bei dem eingestellten Versatz $\varepsilon$ gemäß der Fig.2 ist die Überlappung bereits so groß, daß praktisch sämtliches Licht aus der einkoppelnden Faser in die weiterführende Faser übergekoppelt wird.

In Fig.3 sind für einen Koppler gemäß dem in den Fig.1 und 2 dargestellten Ausführungsbeispiel der Auskoppelgrad 5, der Einkoppelverlust 6 sowie der Einfügeverlust 7 in Dezibel als Funktion des Versatzes $\varepsilon$ dargestellt. Wird mit $\eta$ (i→j) der gemeinsame Durchschnitt der Kernfläche der Fasern i und j, bezogen auf die Kernfläche der Faser i, bezeichnet, so ergeben sich in Dezibel als Funktion des Faserachsenversatzes $\varepsilon$ für:

Auskoppelgrad:    $-10 \lg \eta \, (1 \to 3)$

Einkoppelverlust:   $-10 \lg \eta \ (4 \to 2)$

Einfügeverlust:   $-10 \lg (\eta \ (1 \to 2) + \eta \ (1 \to 3))$

Man erkennt aus der Fig.3 deutlich, wie der Einkoppelverlust nach der Kurve 6 mit steigendem Faserachsenversatz abnimmt. Bei einem Versatz $\varepsilon$ von etwa 35 µm, das entspricht dem Kerndurchmesser der einkoppelnden Faser 4 plus zweimal dem Manteldurchmesser, ist der Einkoppelverlust praktisch Null.

Die Fig.4 zeigt die entsprechenden Kurven für einen bekannten Koppler, bei dem sämtliche Fasern den gleichen Durchmesser aufweisen. Wie man dieser Figur entnehmen kann, sind wegen der gleichen Faserdurchmesser der Einkoppelverlust und der Auskoppelgrad identisch. Eine nahezu verlustfreie Einkopplung mit gleichzeitiger variabler Auskopplung ist bei einem derartigen 4-Tor-Koppler nicht möglich.

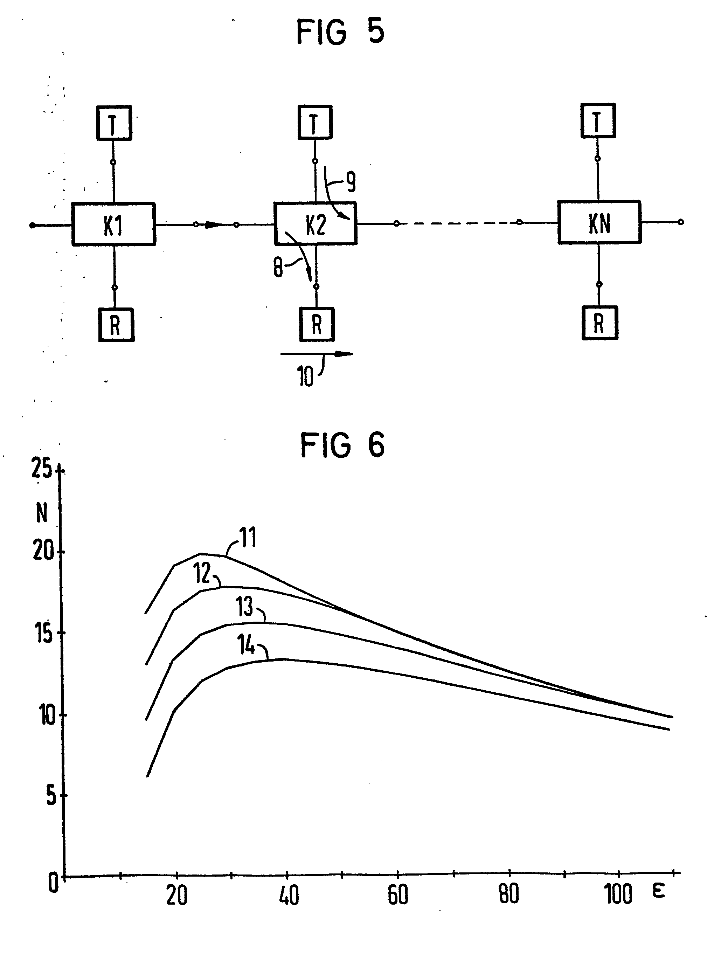

In der Fig.5 ist der prinzipielle Aufbau eines optischen Datenbusses mit T-Netzstruktur mit N identischen 4-Tor-Kopplern gemäß dem in Fig.1 dargestellten Ausführungsbeispiel dargestellt. Die 4-Tor-Koppler sind mit K1, K2 bis KN durchnumeriert. Jeder Koppler ist mit einem Sender T und einem Empfänger R verbunden. Durch die Pfeile 8, 9 und 10 sind beispielhaft am Koppler K2 der Auskoppelgrad, der Einkoppelverlust und der Einfügeverlust angedeutet.

In der Fig.6 ist für einen Datenbus gemäß der Fig.5 die maximale Anzahl N der Koppler und damit der Endgeräte als Funktion des Faserachsenversatzes $\varepsilon$ dargestellt. Die einzelnen Koppler entsprechen den Kopplern gemäß dem Ausführungsbeispiel nach der Fig.1. Senderseitig lassen sich in die Fasern beispielsweise 400 µW Leistung einkoppeln. Detektorseitig wird eine minimale Leistung von 4 nW gefordert. Sieht man von einer Streckendämpfung ab, so ergibt sich die Kurve 11. Die weiterhin dargestellten Kurven 12, 13 und 14 beziehen sich auf verschiedene Durchmesser der Einkoppelfaser 4. So beträgt der Faserdurchmesser von Faser 4 für die Kurve 12 50 µm, für die Kurve 13 100 µm und für die Kurve 14 schließlich 200 µm. Wie man sieht, nimmt die maximale Anzahl N der Endgeräte mit wachsendem Durchmesser der Einkoppelfaser 4 ab. Außerdem verschiebt sich diese maximale Anzahl N zu größerem Faserachsenversatz $\varepsilon$ . Ein Vergleich dieser Kurven mit den Durchmessern der Einkoppelfasern zeigt, daß außer bei den Gegebenheiten von Kurve 11 die maximale Anzahl N nicht bei solchen Faserachsenversätzen $\varepsilon$ auftritt, bei denen der Einkoppelverlust Null ist.

Ein Vergleich der Kurven 11 und 14 zeigt deutlich den Vorteil der Verwendung des erfindungsgemäßen 4-Tor-Kopplers gegenüber dem bekannten. 14 stellt die Kurve für Koppler dar, bei denen alle vier Fasern identisch sind. Wie man sieht, lassen sich durch Verwendung des erfindungsgemäßen Kopplers erheblich mehr Endgeräte an einen Datenbus in T-Netzstruktur anschließen.

Für die Herstellung der erfindungsgemäßen Koppler mit im Querschnitt kreisförmigen Fasern eignen sich vorteilhaft die folgenden Techniken:

Auf ein Substrat 20 und ein Superstrat 30 werden Führungsanschläge 21, 21' bzw. 31, 31' in einen solchen Abstand angebracht, daß die Faser 1 die Kanten dieser Führungsanschläge berührt, wenn sie in die dazwischenliegenden Gräben gelegt wird und auf dem Substrat 20 aufliegt (Fig.7). Die Dicke der Führungsanschläge 21, 21', 31 und 31' wird durch das Verhältnis der Durchmesser der Fasern 1 und 4 bestimmt, so daß die Verbindungsebene der Achsen beider Fasern parallel zum Substrat 20 liegt. Die Führungsanschläge können z.B. aus Kunststoff sein. Sie können aufgeklebt werden oder, wenn sie aus lichtempfindlichem Material bestehen, auch fotolithografisch erzeugt werden. Über eine Andrückfolie 22 wird die Faser 4 gegen die Faser 1 gedrückt und dann fixiert. Durch Auflegen des Superstrates wird ein Ausweichen der Fasern nach oben verhindert. Für die nötige mechanische Festigkeit sorgt z.B. ein Kleber. An die Faser 1 schließt sich ein weiteres Andrückplättchen 22' als Anschlag für eine zweite Faser 4 an, an die dann wiederum eine Faser 1 anschließt. Auf diese Weise fortfahrend können mehrere Faserpaare aufgebracht werden.

Anschließend wird diese Einheit quer zu den Fasern 1, 4 durchgetrennt und die Trennfläche poliert. Eine Einheit für die Faserpaare 2 und 3 wird entsprechend hergestellt. Die Fasern 2 und 3 liegen paarweise auf dem Substrat auf Berührung. Diese Paare sind wiederum durch Andrückplättchen voneinander getrennt. Auch diese Einheit mit Substrat und Superstrat wird quer zu den Fasern aufgetrennt und die Schnittflächen poliert. Diese zweite Einheit ist in der Figur nicht dargestellt.

Die beiden Einheiten werden stirnseitig zusammengeführt, wobei die Faserachsen in einer Ebene liegen sollen, gegeneinander bis zur Einstellung des gewünschten Teilungsverhältnisses verschoben und anschließend miteinander verklebt. Zum Schluß werden die einzelnen Koppler durch Aufsägen in Längsrichtung zwischen den Faserpaaren erhalten.

Wie die Fig.8 zeigt, kann die Einheit mit den Faserpaaren 1 und 4 auch mit Hilfe der Technik des Vorzugsätzens in Silizium gewonnen werden. Die Höhenanpassung der Fasern 1 und 4 erfolgt hierbei dadurch, daß in das Siliziumsubstrat 40 und das Siliziumsuperstrat 50 Gräben entsprechender Breite und Tiefe für die Fasern 1 erzeugt werden. Die Fasern 4 werden dann wiederum über eine Andrückfolie 41 an die Faser 1 herangeführt. Die übrigen Arbeitsschritte entsprechen dann wiederum den anhand der Fig.7 erläuterten.

Bei den Herstellungsprinzipien nach Fig.7 und Fig.8 werden die beiden Hälften des Kopplers – die eine Hälfte enthält die Fasern 1 und 4, die andere die Fasern 2 und 3 – in getrennten Arbeitsschritten hergestellt und dann versetzt aneinandergefügt. Dabei sollen die Substrat-Dicken jeweils so gewählt sein, daß alle Faserachsen in einer Ebene liegen. Bei der im folgenden beschriebenen Herstellungs-Technik ist dies automatisch gewährleistet, weil ein gemeinsames Substrat verwendet wird.

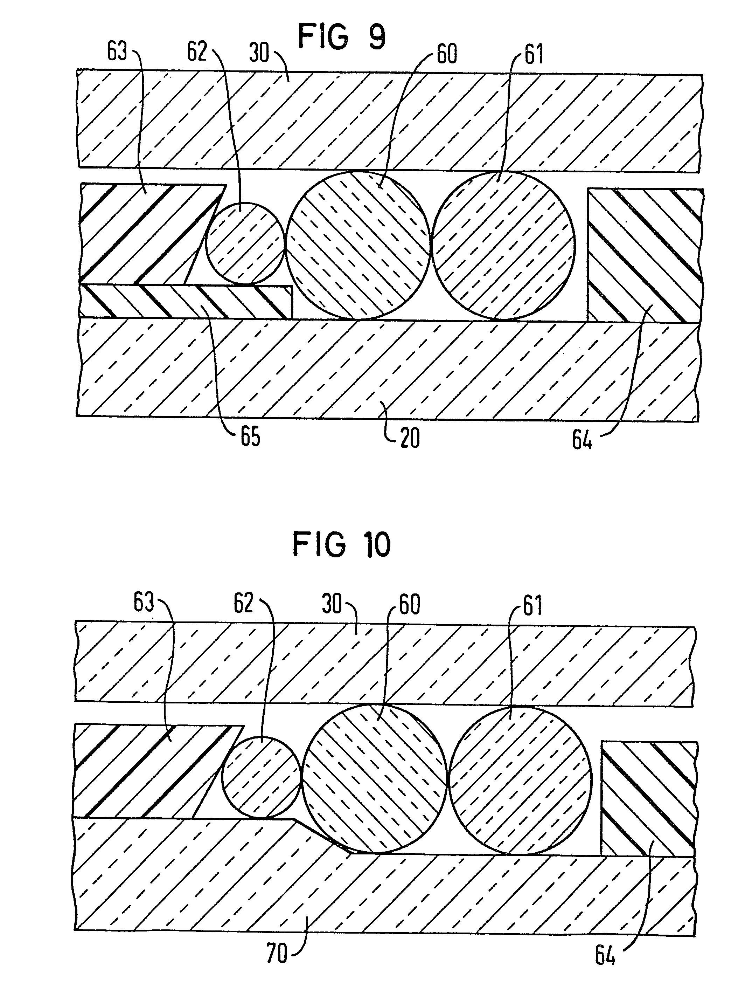

Für die Herstellung eines 4-Tor-Kopplers werden, wie in Fig.9 dargestellt, zwei dicke Fasern 60, 61 und für die Einkopplung eine dünne Faser 62 auf Berührung nebeneinander gelegt. Die dünne Faser 62 kann abweichend von den Ausführungsformen gemäß der Fig.7 und 8 über ein schräg geschnittenes Plättchen 63 aus Kunststoff oder Glas an die dicke Faser 60 gedrückt werden. Dieses Plättchen 63 verhindert ein seitliches und höhenmäßiges Ausweichen. Auf der anderen Seite verhindert eine Andrückfolie 64 das seitliche Ausweichen. Für den Höhenausgleich sorgt ein Plättchen 65.

Im Ausführungsbeispiel gemäß Fig.10 wird der Höhenausgleich dadurch erzielt, daß ein entsprechender Kantenverlauf in das Siliziumsubstrat 70 geätzt wird.

Nach Fixierung der drei Fasern 60-62 z.B. durch Kleber
wird die Einheit wieder quer zu den Fasern getrennt.
Die Endflächen werden poliert und die beiden entstandenen Hälften definiert versetzt aneinander gefügt und
fixiert. Dabei wird auf jeder Hälfte eine Faser optisch
nicht ausgenutzt.

In den Ausführungsbeispielen ist allein der erfindungsgemäß Koppler dargestellt. Dieser Koppler kann in bekannter Weise über Steckverbindungen mit den Systemfasern verbunden werden.

10 Figuren
 5 Ansprüche

-1-  VPA 79 P 7175

<u>Patentansprüche:</u>

1. Optischer 4-Tor-Koppler mit einer ankommenden, einer weiterführenden, einer einkoppelnden und einer auskoppelnden Multimode-Lichtleitfaser, bei dem die planen Stirnflächen der vier Fasern achsenversetzt aneinanderstoßen, dadurch g e k e n n z e i c h n e t , daß die Querschnittsfläche der einkoppelnden Lichtleitfaser (4) kleiner ist als die der übrigen Fasern (1 bis 3).

2. Optischer 4-Tor-Koppler nach Anspruch 1, g e k e n n - z e i c h n e t dadurch, daß die Achsen aller Fasern (1 bis 4) in einer Ebene liegen.

3. Optischer 4-Tor-Koppler nach Anspruch 1 oder 2, dadurch g e k e n n z e i c h n e t , daß für die übrigen Fasern (1 bis 3) Stufenindex-Dickkernfasern vorgesehen sind.

4. Optischer 4-Tor-Koppler nach einem der Ansprüche 1 bis 3, mit einem Sender am anderen Ende der einkoppelnden Lichtleitfaser, dadurch g e k e n n z e i c h n e t , daß die Kernfläche dieser Faser (4) annähernd gleich der abstrahlenden Fläche des Senders ist.

5. Verwendung mehrerer identischer 4-Tor-Koppler nach einem der Ansprüche 1 bis 4 für ein Bussystem mit T-Netzstruktur.

FIG 1

FIG 2

FIG 3

FIG 4

0026363

1/4

FIG 5

FIG 6

FIG 7

FIG 8

# FIG 9

63    62    30      60    61

65        20        64

# FIG 10

63    62    30    60      61

70        64

Europäisches
Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| A | L'ONDE ELECTRIQUE, Band 56, Nr. 12bis, 1976, Paris, FR, H.H. WITTE: "New optical planar coupler in a data bus system with single multimode fibers", Seiten 607-608<br><br>* Seite 607; Abbildungen 1,4,5 * | 1,2,4, 5 | G 02 B 7/26 H 04 B 9/00 |
| A | SIEMENS FORSCHUNGS UND ENTWICKE-LUNGS BERICHTE, Band 8, Nr. 3, 1979, Berlin, DE, A. REICHELT et al.: "Improved optical tapping elements for graded-index optical fibers", Seiten 130-135<br><br>* Seite 130; Abbildung 1 * | 1 | **RECHERCHIERTE SACHGEBIETE (Int. Cl.³)**<br><br>G 02 B 7/26 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 05-12-1980 | MALIC |

EPA form 1503.1  06.78